# EUROPEAN PATENT APPLICATION

(11) **EP 0 901 943 A2**
(43) Date of publication of application: **17.03.1999**
(21) Application number: 98116551.7
(22) Date of filing: 02.09.1998
(51) Int. Cl.: B60R 21/18, B60R 21/26

(54) **Air belt device**

(30) Priority: 02.09.1997 JP 236909/97
(71) Applicant: TAKATA CORPORATION, Shiga 529-1388 (JP)
(72) Inventor: Suyama, Yoji c/o Takata Corporation, Echi-gun, Shiga 529-1388 (JP)
(74) Representative: Gramm, Werner, Prof. Dipl.-Ing.

(57) **Abstract**

An air belt device comprising: an air belt (14) which is inflatable by gas, a tongue (10) to which one end of the air belt is connected, a buckle (12) with which the tongue is engaged, gas paths formed inside the buckle and the tongue, a filter (33) for gas disposed in one of the gas paths; and a gas generator (16) for supplying gas to the gas path of the buckle, wherein
the gas path has a portion having a large flowing cross sectional area and said filter is disposed in this portion, in order to reduce the loss of gas pressure during air belt inflation.

## Description

### Background of the Invention

The present invention relates to a seat belt device for protecting a vehicle occupant during a vehicle collision, and more particularly to an air belt device comprising an envelop-like belt as a part of the seat belt which is inflated with gas from a gas generator. In detail, the present invention relates to an air belt device provided with a measure to be taken in a case of malfunction of a gas generator.

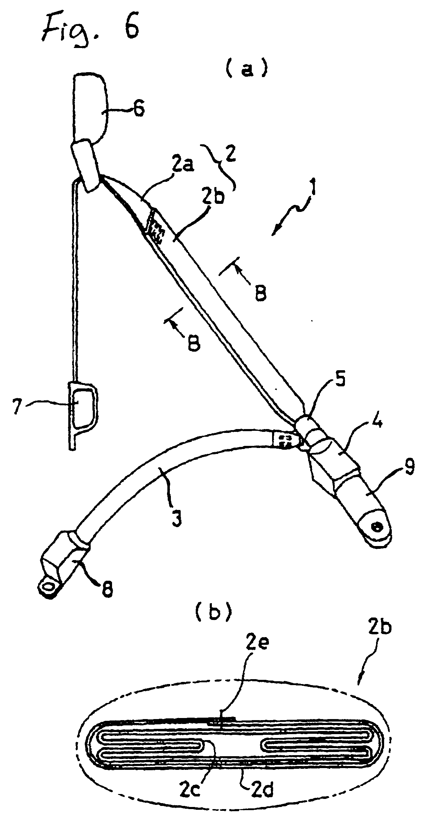

Such air belt devices are well known as shown in, for example, Japanese Patent Unexamined Published Application No. H05-85301. Fig 6(a) is an entire perspective view of an air belt device of the application and Fig. 6(b) is a sectional view taken along a line B-B of Fig. 6(a).

The air belt device 1 comprises a shoulder belt 2 to be extended at an angle from the right side to the left side of an occupant, a lap belt 3 to be extended from the right side to the left side of the occupant, a buckle device 4 disposed on, for example, a vehicle floor, a tongue 5 to be inserted into and engaged with the buckle device 4 when the occupant wears the belt, and an intermediate guide 6 for guiding the shoulder belt 2.

The shoulder belt 2 comprises a normal belt 2a which is the same as a typical conventional seat belt, and an envelop-like belt 2b connected to an end of the normal belt 2b. The normal belt 2a is slidably hung by the intermediate guide 6. The other end of the normal belt 2a is connected to a seat belt retractor 7 with an emergency locking mechanism (ELR) which is fixed to the vehicle body. The normal belt 2a is provided in such a manner as to be wound into the seat belt retractor 7.

The envelop-like belt 2b is positioned to be in contact with the occupant and is connected to the tongue 5 at an end opposite to the end connected to the normal belt 2a.

The lap belt 3 comprises a normal belt which is the same as a typical seat belt, of which one end is connected to the tongue 5 and the other end is connected to a seat belt retractor 8 with an emergency locking mechanism (ELR) which is fixed to the vehicle body. Connected to the buckle device 4 is a gas generator 9 which acts in case of emergency such as a vehicle collision to generate high-pressure gas.

The tongue 5 and the buckle device 4 are provided with paths for introducing gas from the gas generator 9 to the envelop-like belt 2b.

The envelop-like belt 2b of the shoulder belt 2 comprises a belt body 2c formed in an envelop shape and a cover 2d. The belt body 2c is folded as shown by solid lines in Fig. 6(b) and covered by the cover 2d. The both ends of the cover 2b are then connected by stitching 2e so that the envelop-like belt 24 is normally kept in a band-like shape. The stitching 2e of the cover 2d is easily torn by expansion force of the shoulder belt 2 when the gas generator 9 is actuated so that the envelop-like belt 2b is developed as shown by a two-dot chain line.

The tongue 5 is formed in a cylindrical configuration and has a gas path inside thereof. The tongue 5 is provided with a filter at the outlet side of the gas path (the side to which the envelop-like belt 2b is connected) and provided with a cap at the inlet side of gas path (the side which is inserted into the buckle) so as to close the inlet of the gas path. The cap is provided with a tear line along which the cap is opened when the gas generator 9 is actuated to supply gas into the envelop-like belt 2b.

In case where the filter is provided in the cylindrical tongue as mentioned above, the ventilation resistance of the filter is large. In order to compensate the delay in supplying gas into the envelop-like belt 2b, it is necessary to employ a gas generator 9, which generates high pressure of generating gas.

It is an object of the present invention to provide an air belt device which allows the pressure of generating gas of a gas generator to be low.

An air belt device of the present invention comprises: an air belt which is inflatable by gas introduced into the air belt; a tongue to which one end of the air belt is connected, a buckle which the tongue is engaged with, gas paths formed inside the buckle and the tongue, respectively; a filter for gas disposed in one of the gas paths; and a gas generator for supplying gas to the gas path of the buckle. The gas path has a portion having a large flowing cross sectional area and the filter is disposed in this portion.

Since, in the air belt device, the filter is disposed in the portion of which flowing cross sectional area is large, the filter can be provided with large flowing cross sectional area, thereby reducing the ventilation resistance. Therefore, a gas generator with low pressure of generating gas may be employed as the gas generator.

The filter may be a mesh filter or the like.
Figs. 1(a) and 1(b) are sectional views showing a tongue and buckle of an air belt device according to an embodiment.
Fig. 2 is an enlarged sectional view of the buckle of Fig. 1.
Fig. 3 is an enlarged sectional view showing the tongue and the buckle of Fig. 1 in the engaged state.
Fig. 4 is a sectional view showing a case where the tongue and the buckle are not engaged with each other and the gas generator is actuated.
Figs. 5(a) and 5(b) are perspective views of the buckle.
Figs. 6(a) and 6(b) are structural views of a conventional example.

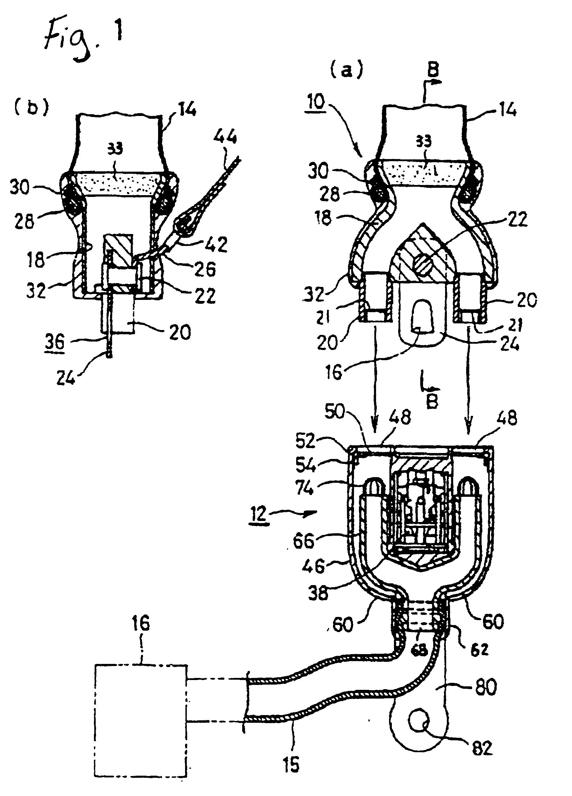

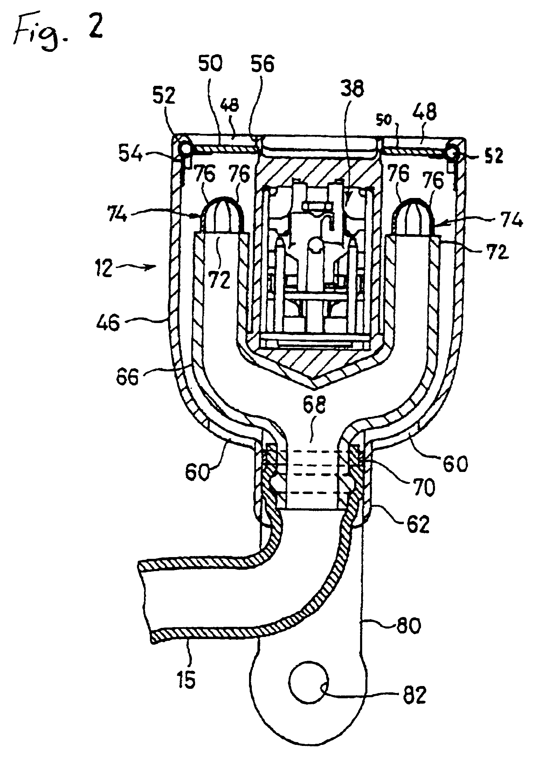

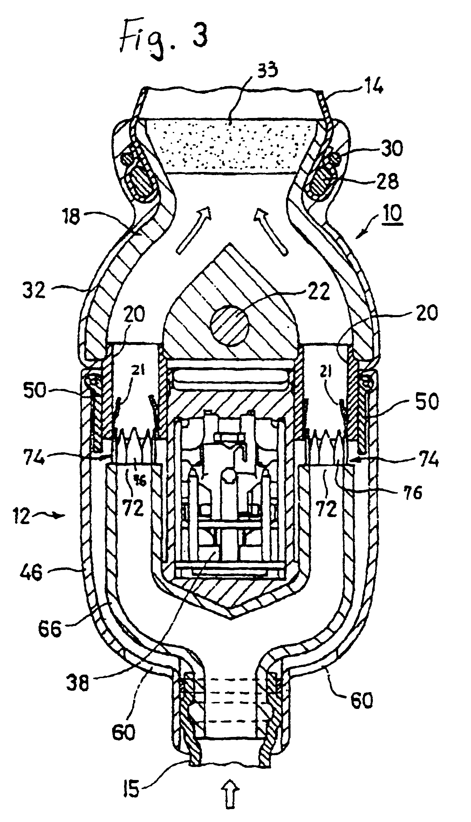

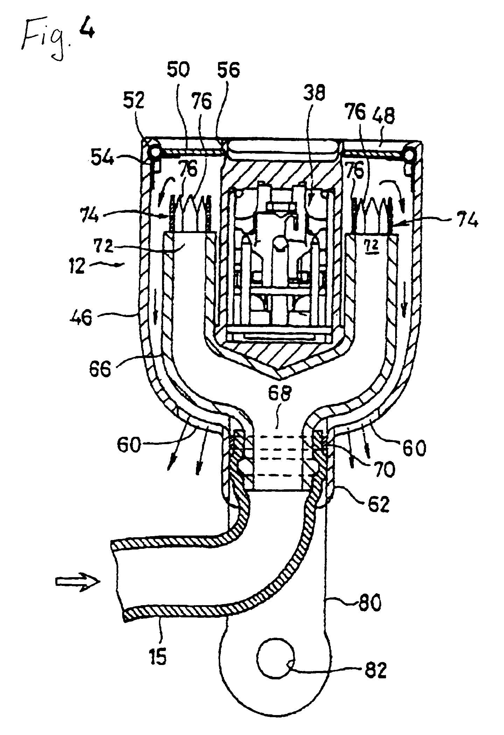

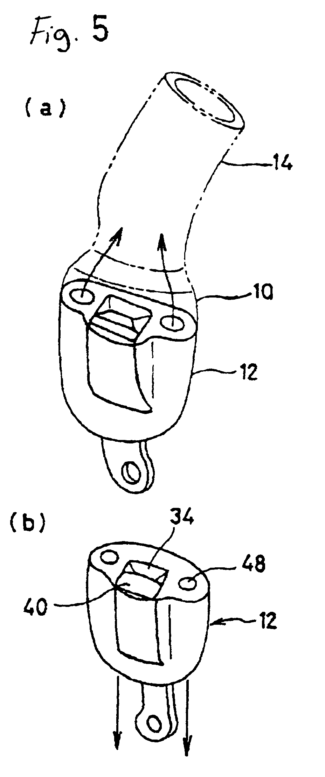

Hereinafter, an embodiment will be described with reference to the drawings. Fig. 1(a) is a longitudinal sectional view showing a tongue and a buckle of an air belt device according to an embodiment of the present invention, and Fig. 1(b) is a sectional view taken along a line B-B of Fig. 1(a). Fig. 2 is an enlarged sectional view showing the buckle of the embodiment, Fig. 3 is an enlarged sectional view showing the tongue and the buckle in the engaged state, Fig. 4 is a sectional view showing a case where the tongue and the buckle are not engaged with each other and the gas generator is actuated, and Fig. 5 is a perspective view of the buckle, (a) showing the flow of gas in the state that the tongue is engaged, and (b) showing the flow of gas in the state that the tongue is not engaged and the gas generator is actuated.

The air belt device comprises an air belt 14, a tongue 10 of which the rear end is connected to the air belt 14, a buckle 12 into which the tongue 10 is inserted, a hose 15, and a gas generator 16 for supplying gas into the buckle 12 through the hose 15. The tongue 10 comprises a allow tongue base 18, cylindrical hollow plugs 20 projectingly mounted on the front ends of the tongue base 18, caps 21 provided inside the plugs 20, respectively, a tongue plate 24 and an anchor 26 which are connected to the tongue base 18 by a connecting pin 22, rings 28, 30 fixing the air belt 14 to the tongue base 18, a cover 32 made of synthetic resin for covering the tongue base 18, and a filter 33 disposed inside the tongue base 18.

The rear end of the tongue base 18 is formed in such a shape that the sectional area of the path gradually increases toward the gas outlet where the filter 33 is provided.

Each cap 21 is provided with a tear line (not shown). Once pressurized gas is applied to the cap 21 from the gas generator 16, the cap 21 is opened along the tear line. Each cap 21 is also provided with a lot of pores in order to allow the path of gas even when the caps 21 are not opened.

The tongue plate 24 is inserted into a tongue-plate inlet 34 (Fig. 5) of the buckle 12 such that a latch hole 36 is latched with a latch pawl of a latch mechanism 38 in the buckle 12. Pressing a press button 40 provided in the buckle 12 releases the latching. At the same time, the tongue plate 24 is pushed out of the buckle 12 by a spring (not shown).

The anchor 26 is provided with an opening 42 into which the front end of the lap belt 44 is inserted so that the lap belt 44 is connected to the anchor 26. The rear end of the lap belt 44 is provided in such a manner as to be wound onto a seat belt retractor for winding the lap belt.

The air belt 14 is a component of the shoulder belt in this embodiment. The rear end of the air belt 14 is connected to the front end of a webbing composing the shoulder belt and the rear end of the webbing is provided in such a manner as to be wound onto a seat belt retractor for winding the shoulder belt.

The buckle 12 has a housing 46 composing its outer shell. The front end of the housing 46 is formed with the aforementioned tongue-plate inlet 34 and plug inlets 48 into which the plugs 20 are inserted.

The plug inlets 48 are closed by check doors 50. The check doors 50 are pivotally connected to the housing 46 by hinge pins 52 and are biased in the closing direction by springs 54.

As plugs 20 are inserted into the plug inlets 48, the check doors 50 are pressed and opened by the plugs 20 as shown in Fig. 3. As the plugs 20 are pulled out of the plug inlets 48, the check doors 50 are biased by the springs 54 to return to the closed state.

When the check doors 50 are in the closed state, as shown in Fig. 1 and Fig. 2, the ends of the check doors 50 are engaged with stopping portions 56 formed in the housing 46 to prevent the check doors 50 from opening outside the housing 46.

Formed in the rear end (lower end) of the housing 46 are relief ports 60 and a hose entry 62 for the hose 15. Disposed inside the housing 46 is a duct 66 of which a gas inlet 68 is inserted into the hose entry 62. The end of the hose 15 is connected to the inlet 68 of the duct 66 by a ring 70.

The inside of the housing 46 is divided into two branches so that the duct 66 is also divided into two branches. The ends of the branches of the duct 66 are gas outlets 72 which are provided with check covers 74, respectively.

Each check cover 74 comprises a plurality of bendable pieces 76 which are connected to each end of the duct 66 by baking, bonding or the like. These bendable pieces 76 are in contact with each other to be tight just like a bud to close the gas outlet 72 when no pressurized gas is applied. These bendable pieces 76 open such that the ends thereof separate from each other as shown in Fig. 3 and Fig. 4. Therefore the check cover 74 is in the open state.

When the bendable pieces 76 are deformed in the opening direction in the state that the plugs 20 are inserted into the plug inlets 48 as shown in Fig. 3, the ends of the bendable pieces 76 enter into the plugs 20.

A bracket 80 is downwardly projected from the housing 46. The bracket 80 has a bolt hole 82 formed therein into which a bolt is inserted to fix the buckle 12 to a vehicle-body member (not shown).

In the air belt device as structured above, the tongue 10 is engaged with the buckle 12 as shown in Fig. 2. In this engagement, the tongue plate 24 is inserted into the tongue-plate inlet 34 and is latched by the latch mechanism 38 as stated above. In addition, the plugs 20 are inserted into the plug inlets 48 so that the ends of the plugs 20 confront the gas outlets 72 of the duct 66. At this time, the check doors 50 are pressed and opened inside the housing 46 by the plugs 20.

Once the gas generator 16 is actuated in the state that the tongue is engaged as shown in Fig. 3, gas flows through the hose 15 and the duct 66, deforms the bendable pieces 76 to open the check covers 74, and thus enters into the plugs 20. Then, the gas opens the caps 21, flows through the hollow portions of the plugs 20 and the tongue base 18, and enters into the air belt 14 through the filter 33 to inflate the air belt 14.

In this case, the tongue base 18 has an outlet portion having an enlarged opening area where the filter 33 is disposed so that the filter 33 is allowed to have a large flowing cross sectional area, thereby reducing the ventilation resistance. Therefore, the gas from the gas generator 16 flows promptly into the air belt 14 through the filter 33 to inflate the air belt 14.

In this embodiment, the ends of the bendable pieces 74 enter into the plugs 20 as shown in Fig. 3 so that spaces between the plugs 20 and the duct outlets 72 are surrounded by the bendable pieces 74. Accordingly, the gas in the duct 76 can be smoothly supplied to the air belt 14 through the plugs 20.

When the gas generator 16 is actuated due to the malfunction or the like in the state that the tongue 10 is not engaged with the buckle 12 as shown in Fig. 2, pressurized gas flows into the duct 66 through the hose 15 in the same manner as the above, presses and opens the bendable pieces 76, and flows inside the housing 46. In this case, the check doors 50 are in the closed state and the check doors 50 are prevented from opening outside the housing 46 so that the gas flows in the space between the duct 66 and the housing 46 so as to spout through the relief ports 60. Even when the gas generator 16 malfunctions in the state that the tongue is not engaged, the gas never spouts toward the occupant because the gas spouts out downwardly from the buckle 12.

In the buckle 12 according to this embodiment, the check doors 50 close the plug inlets 48 when the tongue 10 is not engaged. This prevents entering foreign materials into the housing 46 through the plug inlets 48. Even though foreign materials enter into the housing 46 through chinks of the check doors 50, the foreign materials fall and are discharged from the relief ports 60. The gas outlets 72 of the duct 66 are closed by the check covers 74, thereby preventing the ingress of foreign materials into the duct 66.

In such a manner, foreign materials are prevented from entering into the housing 46 and the duct 66. Therefore, the tongue 10 can be smoothly engaged with the buckle 12. In addition, in is prevented that foreign materials enter into the air belt 14 with gas in operation of the air belt device.

Though, in the above embodiment, the relief ports 60 are formed in the lower portion of the housing 46 to open downwardly, the relief ports 60 may be formed to open toward the sides or obliquely downwardly. Forming the relief ports 60 to open downwardly as illustrated ensures that the gas discharged through the relief ports 60 is prevented from coming in directly contact with the occupant. Furthermore, as mentioned above, if foreign materials enter into the housing 46, the foreign materials fall and are discharged through the relief ports 60.

As mentioned above, according to the present invention, the ingress of foreign materials into the air belt is prevented by the filter. The filter has a large flowing cross sectional area so that a gas generator with low pressure of generating gas my be employed as the gas generator.

## Claims

1. An air belt device comprising: an air belt which is inflatable by gas introduced into the air belt; a tongue to which one end of the air belt is connected, a buckle which the tongue is engaged with, gas paths formed inside the buckle and the tongue, respectively; a filter for gas disposed in one of the gas paths; and a gas generator for supplying gas to the gas path of the buckle, wherein
the gas path has a portion having a large flowing cross sectional area and said filter is disposed in this portion.

2. An air belt device as claimed in claim 1, wherein the flowing cross sectional area of the gas path of the tongue gradually increases toward a gas outlet and said filter is disposed in the gas outlet portion.
